# EUROPEAN PATENT APPLICATION

(11) **EP 4 622 122 A1**
(43) Date of publication of application: **24.09.2025**
(21) Application number: 24204799.1
(22) Date of filing: 04.10.2024
(51) Int. Cl.: H04B 1/04

(54) **TRANSMISSION DEVICE AND TRANSMISSION TRAINING METHOD**

(30) Priority: 22.03.2024 KR 20240039752
(71) Applicant: Samsung Electronics Co., Ltd, Suwon-si, Gyeonggi-do 16677 (KR)
(72) Inventor: LEE, Gwangwon, Suwon-si (KR); KANG, Sungsik, Suwon-si (KR); SONG, Jaegeun, Suwon-si (KR); OH, Sehyeok, Suwon-si (KR); JUNG, Ilho, Suwon-si (KR)
(74) Representative: Marks & Clerk LLP

(57) **Abstract**

A transmitting device including a transmission circuit, a reception circuit and a controller is provided. The transmission circuit transmits first data by using at least one slice in a first bandwidth. The reception circuit receives second data corresponding to the first data. The controller determines the number of slices of the transmission circuit to be used in the first bandwidth based on the first data and the second data.

## Description

### BACKGROUND

### 1. Field

The disclosure relates to a transmitting device and a transmission training method.

### 2. Description of the Related Art

In electronic devices, it is important to quickly and accurately transmit and receive data between transmitters and receivers. However, when the electronic devices consume a lot of power during every operation, transmission/reception can have a detrimental (or even a fatal) effect on the electronic device, especially in mobile products with limited battery power. For example, if the data transmission speed is the same for sending a simple text message and performing a high-performance calculation, the battery of the mobile product will discharge quickly. Accordingly, methods to reduce power consumption of electronic devices are being studied.

### SUMMARY

One or more aspects of the disclosure relate to a transmitting device and a transmission training method providing high power-efficiency.

According to an aspect of the disclosure, there is provided a transmitting device including: a transmission circuit configured to transmit first data in at least one slice, among a plurality of slices in the transmission circuit, in a first bandwidth; a reception circuit configured to receive second data corresponding to the first data; and a controller configured to determine a first number of slices, among the plurality of slices, for the first bandwidth based on the first data and the second data.

According to another aspect of the disclosure, there is provided a transmitting device including: a first transmission gate configured to: receive a first signal, and output the first signal to a first node based on a selection signal of a first level; a first N-channel MOSFET (NMOS) transistor including: a drain connected to the first node, a gate through which an inversion signal of the selection signal is input, and a source that is grounded; a first inverter configured to output a second signal by inverting a signal input through the first node; a first P-channel MOSFET (PMOS) transistor including: a source through which a first driving voltage is input, and a gate through which the second signal is input, the first PMOS transistor configured to be turned on based on the second signal of a second level to transmit data to a receiving device; a second transmission gate configured to: receive the first signal, and output the first signal to a second node based on a selection signal of the first level; a second PMOS transistor including: a drain connected to the second node, a gate through which the selection signal is input, and a source through which a second driving voltage is input; a second inverter configured to output a third signal by inverting a signal input through the second node; and a second NMOS transistor including: a source that is ground, and a gate through which the third signal is input, the second NMOS transistor configured to be turned on based on the third signal of the first level to transmit the data to the receiving device.

According to another aspect of the disclosure, there is provided a transmission training method including: transmitting first data to a receiver by using at least one slice, among a plurality of slices, in a first bandwidth; receiving second data corresponding to the first data from the receiver; storing the first bandwidth and a number of slices used for transmission of the first data, based on a verification of the second data being successful; and increasing the number of slices used for transmission of the first data, based on the verification of the second data being unsuccessful.

At least some of the above and other features of the disclosure are set out in the claims.

### BRIEF DESCRIPTION OF DRAWINGS

Embodiments herein are illustrated in the accompanying drawings, throughout which like reference letters indicate corresponding parts in the various figures. The embodiments herein will be better understood from the following description with reference to the following illustrative drawings. Embodiments herein are illustrated by way of examples in the accompanying drawings, and in which:
FIG. 1 is a schematic block diagram of an electronic system according to an embodiment.
FIG. 2 is a block diagram of an electronic system according to an embodiment.
FIGS. 3 to 5 are drawings for explaining an input/output training of a transmitter according to an embodiment.
FIG. 6 is a table for explaining data stored in a register according to an embodiment.
FIGS. 7 to 9 are block diagrams of a transmitter according to an embodiment.
FIG. 10 is a table for explaining a first driving voltage according to an embodiment.
FIG. 11 is a circuit diagram for explaining a first transmission slice according to an embodiment.
FIG. 12 is a flowchart of an input/output training method according to an embodiment.
FIG. 13 is a table for explaining a power-efficiency of a transmitter according to an embodiment.
FIG. 14 is a graph for explaining a power-efficiency of a transmitter according to an embodiment.
FIG. 15 is a graph for explaining a power-efficiency of a transmitter according to an embodiment.
FIG. 16 is a block diagram of a memory system according to an embodiment.
FIG. 17 is a block diagram of an electronic system according to an embodiment.
FIG. 18 is a block diagram of a computing system according to an embodiment.

### DETAILED DESCRIPTION

In the following detailed description, only certain embodiments of the disclosure have been shown and described, simply by way of illustration. As those skilled in the art would realize, the described embodiments may be modified in various different ways, all without departing from the scope of the present invention.

Accordingly, the drawings and description are to be regarded as illustrative in nature and not restrictive. Like reference numerals designate like elements throughout the specification. In a flowchart described with reference to the drawings, an order of operations may be changed, several operations may be merged, some operations may be divided, and specific operations may not be performed.

Embodiments herein may be described and illustrated in terms of blocks which carry out a described function or functions. These blocks, which may be referred to herein as managers, units, modules, hardware components or the like, are physically implemented by analog and/or digital circuits such as logic gates, integrated circuits, microprocessors, microcontrollers, memory circuits, passive electronic components, active electronic components, optical components, hardwired circuits and the like, and may optionally be driven by a firmware. The circuits may, for example, be embodied in one or more semiconductor chips, or on substrate supports such as printed circuit boards and the like. The circuits constituting a block may be implemented by dedicated hardware, or by a processor (e.g., one or more programmed microprocessors and associated circuitry), or by a combination of dedicated hardware to perform some functions of the block and a processor to perform other functions of the block. Each block of the embodiments may be physically separated into two or more interacting and discrete blocks without departing from the scope of the disclosure. Likewise, the blocks of the embodiments may be physically combined into more complex blocks without departing from the scope of the disclosure.

In addition, expressions written in the singular may be construed in the singular or plural unless an explicit expression such as "one" or "single" is used. Terms including ordinal numbers such as first, second, and the like will be used only to describe various components, and are not to be interpreted as limiting these components. These terms may be used for the purpose of distinguishing one constituent element from other constituent elements.

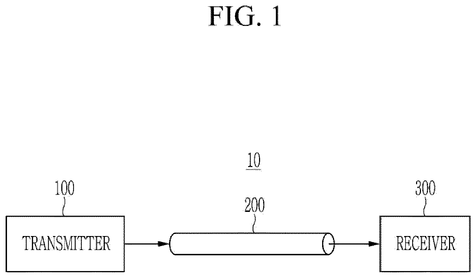

FIG. 1 is a schematic block diagram of an electronic system according to an embodiment.

Referring to FIG. 1, an electronic system 10 may include a transmitter 100 and a receiver 300. Each of the transmitter 100 and the receiver 300 may be implemented to be included in different semiconductor devices (or electronic devices), or may be implemented to be included in one semiconductor device.

The electronic system 10 may be provided with a communication channel 200 between the transmitter 100 and the receiver 300. In an embodiment, the communication channel 200 may also be implemented as a wired channel for wired communication such as a copper line on the substrate, or may be implemented as a radio channel for wireless communication. The substrate may be a printed circuit board (PCB), or the like, but is not particularly limited. The transmitter 100 may transmit data to the receiver 300 through the communication channel 200.

In an embodiment, the transmitter 100 may be a memory controller, and the receiver 300 may be a memory device. In some embodiments, memory the controller may be included in a host such as a central processing unit (CPU), a graphics processing unit (GPU), or an application processor (AP), or the like. The memory device may include a volatile memory or a non-volatile memory, or the like. For example, the memory device may include a dynamic random-access memory (DRAM) device.

In an embodiment, the transmitter 100 may be a host, and the receiver 300 may be a peripheral device. The peripheral device may include a display device, a camera device, a communication device, a storage device, or the like. However, the disclosure is not limited thereto, and as such, according to another embodiment, the transmitter 100 and the receiver 300 may be implemented as various components that exchange data by using the communication channel 200. According to an embodiment, the receiver 300 may also transmit data to the transmitter 100, and the transmitter 100 may receive data from the receiver 300.

In an example case in which the peripheral device is a display device or a camera device, the communication channel 200 may include wires of physical layer D-PHY or C-PHY of the protocol defined by Mobile Industry Processor Interface (MIPI) alliance. The host and the device (e.g., a display device, a camera device, or the like) may exchange data and control information by using wires of the communication channel 200.

The transmitter 100 may include a plurality of transmission circuits. The plurality of transmission circuits may transmit data to the receiver 300 through the communication channel 200. The transmitter 100 may determine a selection code for selecting at least one transmission circuit. The transmitter 100 may select at least one of the plurality of transmission circuits based on the selection code. The selected at least one of the plurality of transmission circuits may be used to transmit data to the receiver 300 through the communication channel 200. Other transmission circuits may not be in use, or may not be used to transmit the data to the receiver 300.

The transmitter 100 may determine the selection code through an input/output training. The input/output training is for selecting the optimal number of transmission circuits, and the input/output training according to an example may include a writing training.

For example, the transmitter 100 may select P transmission circuits (P is an integer of 1 or more) based on a first selection code. The transmitter 100 may transmit first data to the receiver 300 by using the P transmission circuits. Other transmission circuits may not be in use, or may not be used to transmit the first data. The receiver 300 may transmit second data to the transmitter 100 based on the first data. For example, the receiver 300 may record the second data based on the first data, and may output the second data to the transmitter 100. The transmitter 100 and the receiver 300 may enable the bi-directional communication.

The transmitter 100 may verify the second data. For example, the transmitter 100 may determine the verification to be successful based on the first data and the second data coinciding with each other, and may determine the verification to have failed when the first data and the second data not coinciding with each other. In an example case in which the verification is successful, the transmitter 100 may maintain the first selection code. The first data coinciding with the second data may comprise the first and second data being the same, being equal, or having an equal value.

In an example case in which the verification fails, the transmitter 100 may correct the first selection code. For example, the transmitter 100 may use a second selection code increased from the first selection code. That the transmitter 100 increases the first selection code may also be understood as increasing the bit value included in the code.

The transmitter 100 may select Q transmission circuits (Q is an integer greater than 1) based on the second selection code. Q may be greater than P. The transmitter 100 may transmit third data to the receiver 300 by using Q transmission circuits. The receiver 300 may transmit fourth data to the transmitter 100 based on the third data. The transmitter 100 may verify the fourth data based on the third data. The transmitter 100 may maintain the second selection code based on the verification being successful, and may correct the second selection code based on the verification being unsuccessful (i.e., the verification fails).

As such, the transmitter 100 may correct the selection code until the verification is successful. The transmitter 100 may reduce the operating power by selecting the optimal number of transmission circuits through the training at various situations, and the power-efficiency of the electronic system 10 may be improved.

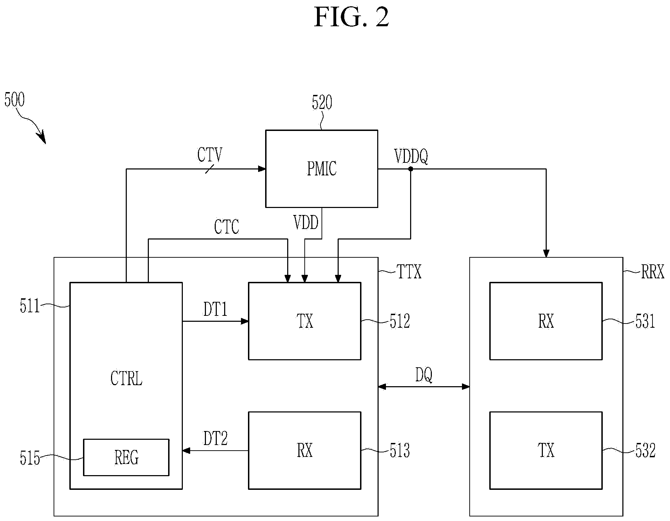

FIG. 2 is a block diagram of an electronic system according to an embodiment.

Referring to FIG. 2, an electronic system 500 according to an embodiment may include a transmitter TTX, a receiver RRX, and a power management integrated circuit (PMIC) 520. However, the disclosure is not limited thereto, and as such, according to an embodiment, the electronic system 500 may other components.

The transmitter TTX and the receiver RRX may exchange data DQ through a data channel. For example, the transmitter TTX may transmit the data DQ to the receiver RRX, and the receiver RRX may receive the data DQ from the transmitter TTX.

The transmitter TTX and the receiver RRX may be configured to enable the bi-directional communication. That is, the transmitter TTX may transmit the data DQ and receive the data DQ. Similarly, the receiver RRX may transmit the data DQ and receive the data DQ. For example, the transmitter TTX may include a transmission circuit (TX) 512 configured to transmit the data DQ to the receiver RRX and a reception circuit (RX) 513 configured to receive the data DQ from the receiver RRX. In a similar manner, the receiver RRX may include a reception circuit (RX) 531 configured to receive the data DQ from the transmitter TTX and a transmission circuit (TX) 532 configured to transmit the data DQ to the transmitter TTX.

The receiver RRX may further include other components in addition to the reception circuit 531 and the transmission circuit 532. In an example case in which the receiver RRX is a memory device, the receiver RRX may further include a memory cell array. In an example case in which the receiver RRX is a display device, the receiver RRX may further include a component such as a source driver or the like for displaying the image. The transmitter TTX may be provided in a physical layer PHY

The transmitter TTX may include a controller (CTRL) 511, the transmission circuit 512, and the reception circuit 513. The controller 511 may generate a first control signal CTV and a second control signal CTC. The first control signal CTV may be a signal for controlling the PMIC 520. The PMIC 520 may output a first driving voltage VDD or a second driving voltage VDDQ based on the first control signal CTV. The transmitter TTX may further include other components in addition to the controller 511, the transmission circuit 512 and the reception circuit 513.

The first control signal CTV may include a plurality of voltage control signals. For example, the first control signal CTV may include a first voltage control signal and a second voltage control signal. In an example case in which the controller 511 transmits the first voltage control signal to the PMIC 520, the PMIC 520 may output the first driving voltage VDD. In an example case in which the controller 511 transmits the second voltage control signal to the PMIC 520, the PMIC 520 may output the second driving voltage VDDQ.

The second control signal CTC may be a signal for controlling the transmission circuit 512. The transmission circuit 512 may include a plurality of transmission slices. The plurality of transmission slices may have a same circuit structure. In one or more embodiments, a transmission slice may comprise a unit or section of the transmission circuit 512 which is repeated within the overall transmission circuit 512. While transmission slices have been described, these may simply be refers to as slices.

The transmission circuit 512 may receive data DT1 from the controller 511. The controller 511 may transmit the data DT1 to the transmission circuit 512 to be transmitted to the receiver RRX. For example, the controller 511 may transfer the data DT1 to the transmission circuit 512 to be transmitted to the receiver RRX. The plurality of transmission slices may generate a signal based on the data DT1, and may transmit the generated signal to the reception circuit 531. The signal may correspond to the first data DT1. In other words, the slices may transmit the first data DT1 to the reception circuit 531 of the receiver.

The transmission circuit 512 may turn on at least one of the plurality of transmission slices based on the second control signal CTC. The transmission circuit 512 may turn off remaining transmission slices of the plurality of transmission slices, based on the second control signal CTC. That is, the controller 511 may determine a number of transmission slices to be turned on by the transmission circuit 512, and may generate the second control signal CTC based on the determined number of transmission slices. The slice, which is turned-on, among the plurality of transmission slices may receive the data DT1, and may transmit a signal generated based on the data DT1 to the reception circuit 531.

According to an embodiment, the second control signal CTC may be a selection code including three (3) bits, and the transmission circuit 512 may include eight (8) transmission slices. For example, the selection code may be a three-bit binary number. In an example case in which the controller 511 transmits the second control signal CTC representing a selection code '011' to the transmitter 512, the transmitter 512 may turn on the three transmission slices. The three transmission slices turned on in the transmission circuit 512 may be used to transmit or transfer the data DT1 to the receiver RRX. However, the disclosure is not limited thereto, and as such, the selection code may include a number of bits different than three and the number of transmission slices may be different than eight.

As more transmission slices are used, the signal integrity (SI) characteristics of the data DQ may be improved, such that the data DQ may be transmitted or transferred without distortion. Therefore, in an example case in which the transmitter TTX needs to transmit the data DQ to the receiver RRX by using a relatively high frequency bandwidth, the controller 511 may control the transmitter circuit 512 to transmit the data DQ by using more transmission slices. Meanwhile, in an example case in which the transmitter TTX needs to transmit the data DQ to the receiver RRX by using a relatively low frequency bandwidth, using many transmission slices may cause an inefficient power consumption. Accordingly, the controller 511 may transmit the data DQ by using fewer transmission slices.

The controller 511 may perform an input/output training, and determine the second control signal CTC based on the training result. The input/output training may be performed by using the data DT1 and data DT2 received based on the transmitted data DT1. In an example case in which the data DT1 and the data DT2 coincide with each other, the controller 511 may determine the training to be successful, and in an example case in which the data DT1 and the data DT2 do not coincide with each other, the controller 511 may determine may determine the training to have failed. The controller 511 may store the number of transmission slices used when the training was successful in a register (REG) 515.

For example, the controller 511 may perform the input/output training for each bandwidth, and may store the number of transmission slices determined based on the training result in the register 515. In an example case in which information on bandwidth is received, the controller 511 may read the number of transmission slices corresponding to bandwidth from the register 515. The controller 511 may receive information on the bandwidth from the host. The controller 511 may generate the second control signal CTC corresponding to the number of transmission slices, and transmit the second control signal CTC to the transmission circuit 512.

In some embodiments, the register 515 may also store the second control signal CTC corresponding to the bandwidth. In this case, the controller 511 may read the second control signal CTC from the register 515 and transmit the second control signal CTC to the transmission circuit 512.

For optimization of operation power consumption according to the transmission speed of data, the host may use the dynamic voltage frequency scaling (DVFS) technique. The host may transmit the bandwidth information (e.g., bandwidth level) required for a specific operation at a specific time point to the transmitter TTX. The controller 511 of the transmitter TTX may output the first voltage control signal to the PMIC 520 based on the bandwidth information. The PMIC 520 may supply the first driving voltage VDD to the transmission circuit 512 of the transmitter TTX based on the first voltage control signal. The transmission circuit 512 may transmit data to the receiver RRX, and the receiver RRX may perform a specific operation based on data.

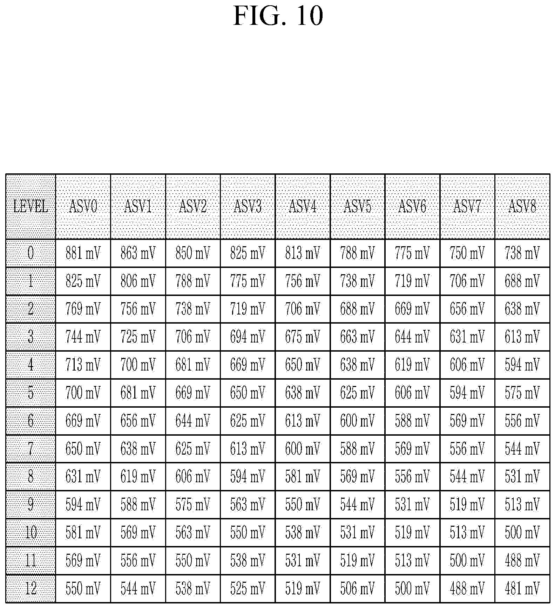

In some embodiments, the electronic system 500 may be classified into one of a plurality of groups. Depending on the group into which the electronic system 500 classified, the used first driving voltage VDD may be different. For example, the electronic system 500 may use the first driving voltage VDD based on the information on group and bandwidth. The first driving voltage VDD generation of the electronic system 500 will be described later with reference to FIG. 10.

The PMIC 520 may supply voltages to the transmitter TTX and the receiver RRX based on the voltage control signal of the controller 511. The PMIC 520 may generate the first driving voltage VDD or the second driving voltage VDDQ, and supply the generated voltage to the transmitter TTX or the receiver RRX. For example, the PMIC 520 may supply the first driving voltage VDD and/or the second driving voltage VDDQ to the transmitter TTX. The PMIC 520 may supply the second driving voltage VDDQ to the receiver RRX.

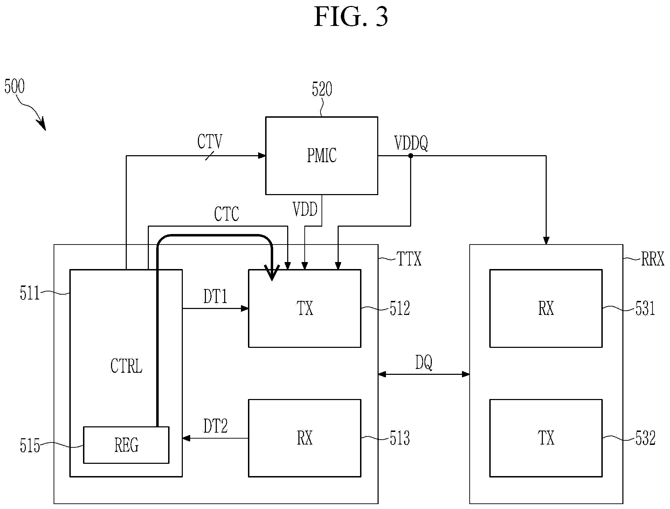

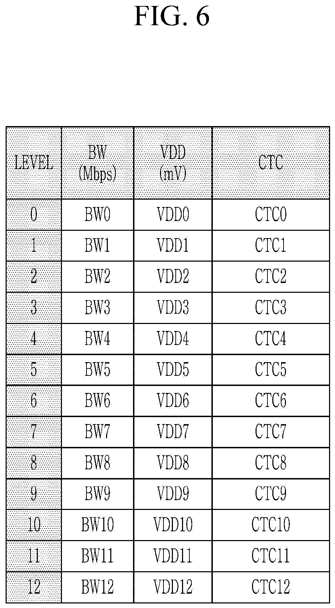

FIGS. 3 to 5 are drawings for explaining an input/output training of a transmitter according to an embodiment. FIG. 6 is a table for explaining data stored in a register according to an embodiment.

Referring to FIG. 3, the electronic system 500 according to an embodiment may include the transmitter TTX, the receiver RRX, and the PMIC 520, and the description in connection with FIG. 2 may be equally applied to these components. Accordingly, redundant description will be omitted.

The controller 511 may receive information on a bandwidth from the host. The host may be implemented as at least one of various processing units such as CPU, AP, GPU, or the like. For example, the host may indicate a first bandwidth to the controller 511.

The controller 511 may perform an input/output training with respect to the first bandwidth. In an embodiment, the controller 511 may determine to turn on one of the plurality of transmission slices. In another embodiment, the register 515 may store a plurality of bandwidths and initial values corresponding to the plurality of bandwidths. The initial values may include a number of transmission slices corresponding to each of the plurality of bandwidths. The controller 511 may retrieve a first initial value indicating a number of transmission slices corresponding to the first bandwidth from the register 515. For example, the transmission circuit 512 may include eight transmission slices, and the register 515 may store '2' as the number of transmission slices, corresponding to the first bandwidth. The transmission circuit 512 may transmit the second control signal CTC corresponding to `2' to the transmission circuit 512 based on a first bandwidth indication. The transmission circuit 512 may turn on two of the transmission slices.

The controller 511 may determine the second control signal CTC corresponding to the number of transmission slices. According to an embodiment, the controller 511 may determine to turn on one transmission slice and generate the second control signal CTC corresponding to 1. However, the disclosure is not limited thereto, and as such, according to another embodiment, the controller 511 may generate the second control signal CTC for corresponding to the initial value stored in the register 515.

The controller 511 may transmit the second control signal CTC to the transmission circuit 512. The transmission circuit 512 may turn on at least one of the plurality of transmission slices based on the second control signal CTC.

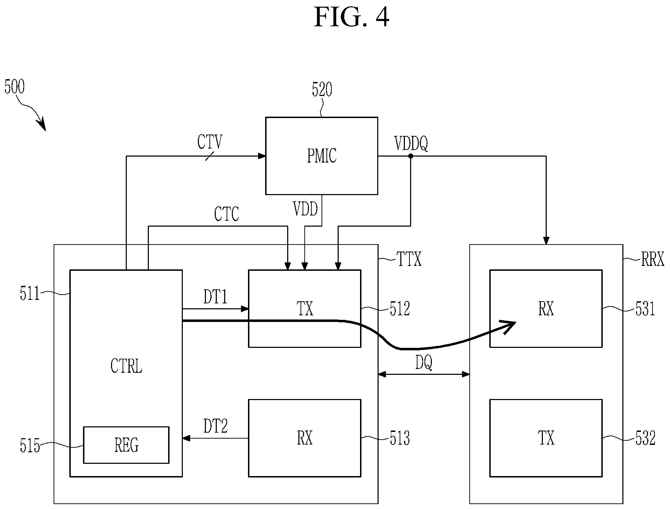

Referring to FIG. 4, the controller 511 may transmit the data DT1 to the transmission circuit 512. The transmission circuit 512 may transmit TX data corresponding to the data DT1 to the reception circuit 531 by using the plurality of transmission slices. In some embodiments, the transmission circuit 512 may also transmit the TX data by using a lessernumber of transmission slices, e.g., the at least one turned on plurality of transmission slices.

The transmission circuit 512 may receive the first driving voltage VDD and the second driving voltage VDDQ from the PMIC 520. The transmission circuit 512 may operate by using the first driving voltage VDD and the second driving voltage VDDQ. For example, a pre-driver circuit configured to transmit signals to the plurality of transmission slices may be included in the transmission circuit 512. The pre-driver circuit may operate by the first driving voltage VDD. The signal transmitted by the pre-driver circuit may be a signal generated based on the data DT1. The pre-driver circuit may input the data DT1 to the buffer. The pre-driver circuit may generate an internal signal for controlling turning on and off of the plurality of transmission slices based on the second control signal CTC.

In addition, the plurality of transmission slices of the transmission circuit 512 may operate by using the second driving voltage VDDQ. The plurality of transmission slices may generate the TX data based on a signal output by the buffer of the pre-driver circuit, and transmit the TX data to the reception circuit 531.

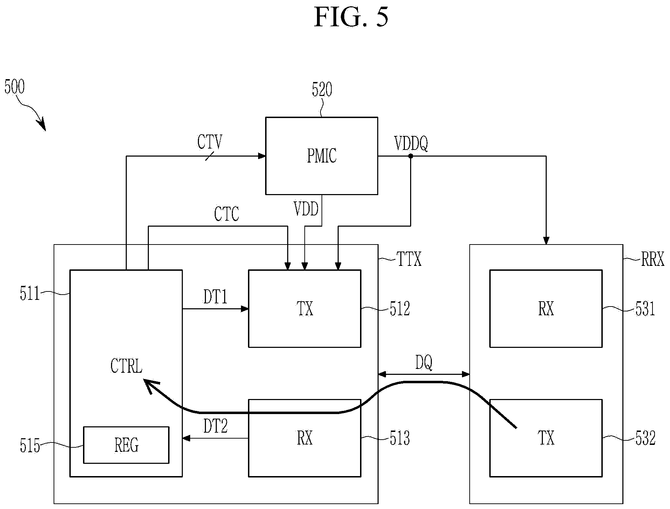

Referring to FIG. 5, the transmission circuit 532 of the receiver RRX may transmit RX data to the reception circuit 513 of the transmitter TTX. The RX data may correspond to the TX data, and the receiver RRX may include a component for generating the RX data based on the TX data. In an embodiment, the receiver RRX may be a memory device, and may record the TX data in the memory cell array. The receiver RRX may read the recorded data and output it as the RX data.

The reception circuit 513 of the transmitter TTX may receive the RX data from the transmission circuit 532. The reception circuit 513 may generate the data DT2 based on the RX data. The reception circuit 513 may transmit the data DT2 to the controller 511. The RX data may correspond with the data DT2.

The controller 511 may verify the data DT2. For example, the controller 511 may compare the data DT1 and the data DT2. The controller 511 may determine the verification to be successful based on the data DT1 and the data DT2 coinciding with each other, and the controller 511 may determine the verification to have failed, based on the data DT1 and the data DT2 not coinciding with each other. For example, in a case in which the data DT2 matches the data DT1, the controller 511 determines that the verification is successful, and in a case in which the data DT2 does not match the data DT1, the controller 511 determines that the verification is unsuccessful (or failed).

In an example case in which the verification fails, the controller 511 may change the number of transmission slices. For example, the controller 511 may change the second control signal CTC. For example, the second control signal CTC may include a plurality of bits, and the controller 511 may increase the second control signal CTC by 1 bit. The controller 511 may increase or decrease the bit value of the second control signal CTC by using the counter.

The transmission circuit 512 may transmit the TX data to the reception circuit 531 by using more transmission slices based on the changed second control signal CTC. For example, the transmission circuit 512 may transmit the TX data to the reception circuit 531 by using one or more transmission slice than in the previous transmission based on the changed second control signal CTC being incremented by 1 bit. As such, the controller 511 may adjust the second control signal CTC until the verification is successful.

In an example case in which the verification is successful, the controller 511 may store the second control signal CTC used for the verification into the register 515. For example, the register 515 may store the first bandwidth and the second control signal CTC used for the verification of the data DT1 and the data DT2 in the first bandwidth.

The controller 511 may perform verification with respect to each of the plurality of bandwidths, and may store in the register 515 the second control signal CTC corresponding to each of the plurality of bandwidths based on the verification being successful. As such, when the input/output training with respect to the plurality of bandwidths of the controller 511 is completed, the data stored by the register 515 may be the same as FIG. 6.

Referring to FIG. 6, the register 515 may store a level, a bandwidth BW [Mbps], a first driving voltage VDD [mV], and the second control signal CTC. In an embodiment, level may include a level 0 to level 12, the bandwidth may include BW0 to BW12, the first driving voltage VDD may include VDD0 to VDD12, and the second control signal CTC may include CTC0 to CTC12. As the level value is smaller, the speed increases, the bandwidth becomes greater, the first driving voltage VDD becomes higher, the bit value of the second control signal CTC may become larger. However, the disclosure is not limited thereto, and as such, according to another embodiment, the number of the level may be different from thirteen.

In addition, the register 515 may further store information on at least one among the transmitter TTX and the receiver RRX.

In an embodiment, the controller 511 may receive information on a level 3 and/or BW3 from the host. The controller 511 may retrieve the first driving voltage VDD and the second control signal CTC corresponding to the level 3 and/or BW3 from the register 515. The controller 511 may generate the first control signal CTV for outputting VDD3 corresponding to the level 3 as the first driving voltage VDD. The controller 511 may output the first control signal CTV to the PMIC 520. In addition, the controller 511 may output CTC3 to the transmission circuit 512 as the second control signal CTC.

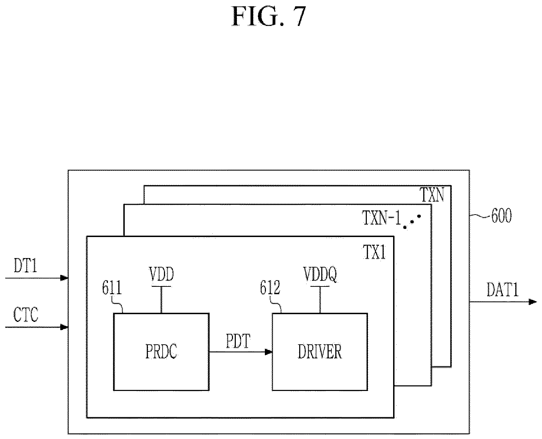

FIGS. 7 to 9, are block diagrams of a transmitter according to an embodiment. In FIGS. 7 to 9, the operation of selecting the plurality of transmission slices in a transmitter 600 according to an embodiment may be described.

Referring to FIG. 7, the transmitter 600 according to an embodiment may receive the data DT1 and the second control signal CTC. The transmitter 600 may receive the data DT1 and the second control signal CTC from the controller (e.g., 511 of FIG. 2). The transmitter 600 may generate first transmission data DAT1 (or first data) based on the data DT1 and the second control signal CTC, and transmit the first transmission data DAT1 to the receiver. The first transmission data DAT1 may be data of 1 bit.

The transmitter 600 may include a plurality of first transmission slices TX1 to TXN for transmitting the first transmission data DAT1. The transmitter 600 may turn on at least one of the plurality of first transmission slices TX1 to TXN based on the second control signal CTC. Hereinafter, a first transmission slice TX1 may be described as an example, and the description on the first transmission slice TX1 may also be equally applied to other first transmission slices.

The first transmission slice TX1 may include a pre-driver circuit (PRDC) 611 and a driver 612. The pre-driver circuit 611 may be operated by the first driving voltage VDD. The pre-driver circuit 611 may generate a signal PDT based on the data DT1. For example, the pre-driver circuit 611 may include a buffer, and may input the data DT1 to the buffer. The buffer may output the signal PDT based on the data DT1.

In addition, the pre-driver circuit 611 may further generate an internal signal for controlling turning on and off of the driver 612 based on the second control signal CTC. The driver 612 may be turned on or turned off based on an internal signal of the pre-driver circuit 611. The driver 612 may be operated by the second driving voltage VDDQ.

The driver 612, which is turned-on, may generate first TX data based on the second driving voltage VDDQ and the signal PDT and transmit it to the receiver. The first TX data output by the turned on driver(s) among the plurality of first transmission slices TX1 to TXN may be transmitted to the receiver as the first transmission data DAT1.

The transmitter 600 may also further include a plurality of second transmission slices transmitting a second transmission data to the receiver. In an embodiment, the transmitter 600 may include a plurality of first to eighth transmission slices, and may transmit data of 1 byte to the receiver by using the plurality of first to eighth transmission slices. However, the disclosure is not limited thereto, and as such, according to another embodiment, the number of transmission slices may be implemented as various quantities.

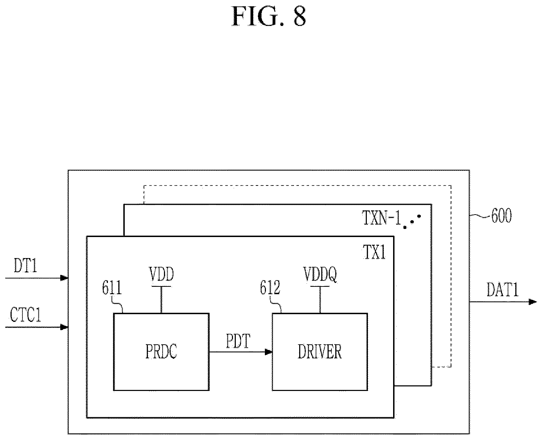

Referring to FIG. 8, the transmitter 600 according to an embodiment may receive the data DT1 and the second control signal CTC1. The transmitter 600 may receive the data DT1 and the second control signal CTC1 from the controller (e.g., 511 of FIG. 2). The data DT1 and the second control signal CTC1 may be input to the pre-driver circuit (e.g., the pre-driver circuit 611) included in each of the plurality of first transmission slices TX1 to TXN.

The transmitter 600 may generate the first transmission data DAT1 based on the data DT1 and the second control signal CTC1. The transmitter 600 may turn on the plurality of first transmission slices TX1 to TXN-1 based on the second control signal CTC1. For example, the pre-driver circuit 611 of the first transmission slice TX1 may generate first internal signal based on the second control signal CTC1. The first internal signal may include a signal for turning on the driver 612.

The pre-driver circuit 611 may generate the signal PDT based on the data DT1. The driver 612 may generate the first TX data based on the signal PDT and transmit it to the receiver. As such, each of the drivers turned on in the first transmission slices TX1 to TXN-1 may generate the first TX data, and the first TX data output by the drivers which are turned-on, may be transmitted to the receiver as the first transmission data DAT1. That is, the pre-driver circuit included in each of the plurality of first transmission slices TX1 to TXN may turn on and off the driver based on the second control signal CTC1, and the driver, which is turned-on, may transmit the first TX data to the receiver.

Meanwhile, the pre-driver circuit of a first transmission slice TXN may generate an N-th internal signal for turning off the driver of the first transmission slice TXN, based on the second control signal CTC1. Since the transmitter 600 may turn off the first transmission slice TXN based on the second control signal CTC1, the power consumption may be reduced and the power-efficiency may be improved.

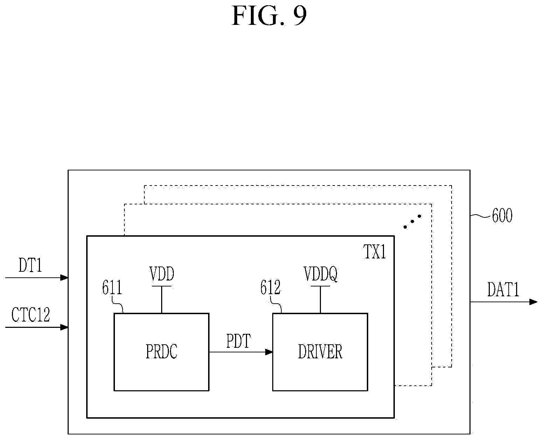

Referring to FIG. 9, the transmitter 600 according to an embodiment may receive the data DT1 and the second control signal CTC12. The transmitter 600 may generate the first transmission data DAT1 based on the data DT1 and the second control signal CTC12. The transmitter 600 may turn on the first transmission slice TX1 based on the second control signal CTC12. For example, the pre-driver circuit 611 of the first transmission slice TX1 may generate first internal signal based on the second control signal CTC12. The first internal signal may include a signal for turning on the driver 612.

The pre-driver circuit 611 may generate the signal PDT based on the data DT1, and the driver 612 may generate the first TX data based on the signal PDT and transmit it to the receiver. The first TX data may be transmitted to the receiver as the first transmission data DAT1.

Meanwhile, the pre-driver circuit of the first transmission slices TXN-1 and TXN may generate N-1-th and N-th internal signals for turning off the driver of the first transmission slices TXN-1 and TXN, based on the second control signal CTC12. Since the transmitter 600 may turn off the first transmission slices TXN-1 and TXN based on the second control signal CTC12, the power consumption may be reduced and the power-efficiency may be improved.

FIG. 10 is a table for explaining a first driving voltage according to an embodiment.

Referring to FIG. 10, an electronic system according to an embodiment (or transmitter) may be classified as one of the plurality of groups ASV0 to ASV8. For example, electronic systems manufactured in various environments by various manners may have different characteristics of resistance, current, or the like. Accordingly, a manufacturer of an electronic system may classify the electronic system as one of the plurality of groups ASV0 to ASV8. According to an embodiment, the group of the electronic system may be fixed. However, the disclosure is not limited thereto, and as such, according to another embodiment, the group may be determined through a test, or the like, when the electronic system is being driven.

In an embodiment, the manufacturer may classify the electronic system as the group ASV0. The electronic system may use 550 mV to 881 mV corresponding to the group ASV0 in FIG. 10, as the first driving voltage. The host may transmit the bandwidth information required for a specific operation at a specific time point to the transmitter. For example, the host may transmit an indication of a level 2 to the controller of the transmitter. The controller may transmit the first voltage control signal indicating an output of 726 mV to the PMIC based on the indication of the level 2. The PMIC may output 726 mV to the transmitter as the first driving voltage based on the first voltage control signal. In addition, the controller may transmit the second voltage control signal to the PMIC, and the PMIC may output a second driving voltage to the transmitter and receiver based on the second voltage control signal. The PMIC may generate the second driving voltage based on the second voltage control signal by using a table other than the table of FIG. 10.

In some embodiments, the electrical property of the electronic system may change due to environmental change, or the like. The electronic system may change from the group ASV0 to a group ASV5. In this case, the electronic system may use 506 mV to 788 mV corresponding to the group ASV5 in FIG. 10, as the first driving voltage. In an example case in which the electronic system receives the indication of the level 2 from the host, the PMIC may output 688 mV as the first driving voltage.

However, the disclosure is not limited thereto, and as such, according to another embodiment, a different number of levels, a different number of groups, and the table of the first driving voltage of different figures may also be used.

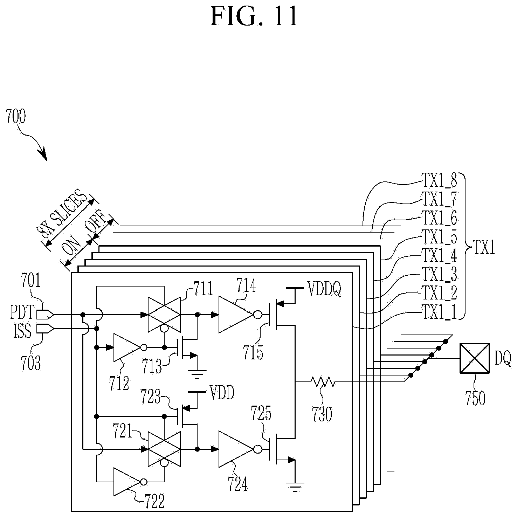

FIG. 11 is a circuit diagram for explaining a first transmission slice according to an embodiment.

Referring to FIG. 11, according to an embodiment, a transmitter 700 may include a first transmission slice TX1. The transmitter 700 may further include second to N-th transmission slices (TX2 to TXN), to transmit data of N-bits to the receiver. Hereinafter, for better understanding and ease of description, the first transmission slice TX1 will be described.

The transmitter 700 may receive the signal PDT and an internal selection signal ISS. The transmitter 700 may receive the signal PDT through a first input 701, and may receive the internal selection signal ISS through a second input 703. The transmitter 700 may also further receive the signal for second to N-th transmission slices.

The first transmission slice TX1 may include a plurality of slices TX1_1 to TX1_8, and the signal PDT and the internal selection signal ISS may be input to the plurality of slices TX1_1 to TX1_8. The plurality of slices TX1_1 to TX1_8 may transmit the data DQ to the receiver based on the signal PDT and the internal selection signal ISS. The plurality of slices TX1_1 to TX1_8 may be referred to as sub-slices.

In an embodiment, slices TX1_1 to TX1_5 among the plurality of slices TX1_1 to TX1_8 may be turned on based on the internal selection signal ISS, and slices TX1_6 to TX1_8 may be turned off based on the internal selection signal ISS. As slices TX1_6 to TX1_8 are turned off, power-efficiency of the transmitter 700 may be improved.

Slices TX1_1 to TX1_5 may transmit or transfer the data DQ to receiver based on the signal PDT. The data DQ may be transmitted or transferred to the data channel through a transmission pad 750.

The slice TX1_1 may include transmission gates 711 and 721, inverters 712, 714, 722, and 724, transistors 713, 715, 723, and 725, and a resistor 730. Here, the transmission gate 711, the inverters 712 and 714, and the transistors 713 and 715 may correspond to a pull-up driver, and the transmission gate 721, the inverters 722 and 724, and the transistors 723 and 725 may correspond to a pull-down driver.

The inverters 722 and 724 may be included in the pre-driver circuit. The pre-driver circuit may further include a buffer, a logic circuit, or the like, in addition to the inverters 722 and 724. The logic circuit may generate internal selection signals for turning on and off each of slices TX1_1 to TX1_5 (e.g., ISS for turning on and off the slice TX1_1). For example, logic circuit may generate the internal selection signals based on the control signal (CTC of FIG. 2) received from the controller.

The transistors 715 and 725 may be included in the driver. The transistors 715 and 725 may be implemented as a field effect transistor (FET). In an embodiment, the transistors 715 and 725 may be implemented as a metal oxide semiconductor (or Silicon) FET(MOSFET). The transistor 715 may be a P-channel MOSFET(PMOS), and the source may be ground. A transistor 725 may be a N-channel MOSFET (NMOS), and the first driving voltage VDD may be applied to the source. However, the disclosure is not limited thereto.

The transmission gates 711 and 721, the inverters 712 and 722, the transistors 713 and 723, and the resistor 730 may enable the operation of the first transmission slice TX1. For example, the transmission gates 711 and 721 and the transistors 713 and 723 may operate as switches. The inverters 712 and 722 may control the operation of the transmission gates 711 and 721 and the transistor 713. The resistor 730 may operate as a terminating resistor, and may enable stable operation by preventing signal reflection of the transmitter 700 and the receiver.

The signal PDT may be input to the transmission gates 711 and 721. The transmission gates 711 and 721 may operate based on the internal selection signal ISS. The inverter 712 may invert the internal selection signal ISS. For example, the inverter 722 may output a first inversion signal, and the inverters 712 and 722 may output a second inversion signal. The first inversion signal and the second inversion signal may also be substantially the same.

The transmission gates 711 and 721 may operate based on the internal selection signal ISS and the inversion signal. In an embodiment, based on the internal selection signal ISS is a first level, the transmission gates 711 and 721 may be turned on to output the signal PDT to inverters 714 and 724. In an example case in which the internal selection signal ISS is the first level, the first and second inversion signals may be a second level. The first level may be a high level and the second level may be a low level.

The transistor 713 may receive the first inversion signal of the second level at the gate and be turned off. The inverter 714 may receive the signal PDT from the transmission gate 711 and output a third inversion signal. The inverter 714 may output the third inversion signal to the gate of the transistor 715. The transistor 715 may be turned on and off based on the third inversion signal. In an example case in which the transistor 715 is turned on, the current may be output through the drain.

The transistor 723 may receive the internal selection signal ISS of the first level at the gate and be turned off. The inverter 724 may receive the signal PDT from the transmission gate 721 and output a fourth inversion signal. The inverter 724 may output the fourth inversion signal to the gate of the transistor 725. The transistor 725 may be turned on and off based on the fourth inversion signal. In an example case in which the transistor 725 is turned on, the current may be output through the drain. As such, based on the internal selection signal ISS being the first level, the slice TX1_1 may be turned on.

In another embodiment, based on the internal selection signal ISS being the second level, the transmission gates 711 and 721 may be turned off, so as not to output the signal PDT to the inverters 714 and 724. In an example case in which the internal selection signal ISS is the second level, first and second inversion signals may be the first level.

The transistor 713 may receive the first inversion signal of the first level at the gate and be turned on. The inverter 714 may not receive the signal PDT from the transmission gate 711 and may output the signal of the first level. The transistor 715 may be turned off based on the signal of the first level.

The transistor 723 may receive the internal selection signal ISS of the second level at the gate and be turned on. The inverter 724 may generate the signal of the second level based on the current of the transistor 723. The inverter 724 may output the signal of the second level to the gate of the transistor 725. The transistor 725 may be turned off based on the signal of the second level. As such, when the internal selection signal ISS is the second level, the slice TX1_1 may be turned off.

Remaining slices TX1_2 to TX1_8 may have the same structure as the slice TX1_1, and redundant description will be omitted. The logic circuit of the pre-driver circuit may generate the internal selection signals for turning the remaining slices TX1_2 to TX1_8 on and off, and the slice, which is turned-on, may be configured to transmit data to the receiver.

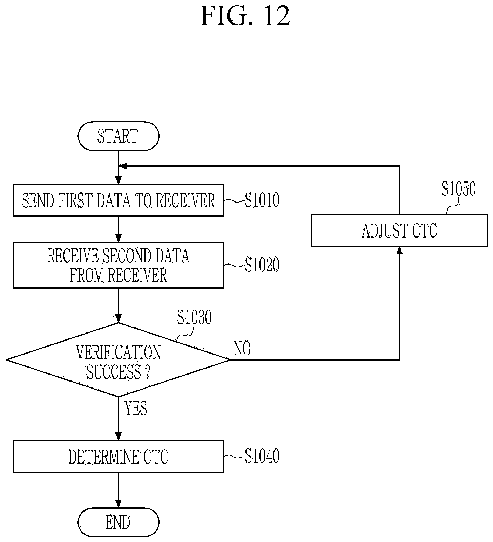

FIG. 12 is a flowchart of an input/output training method according to an embodiment.

Referring to FIG. 12, an input/output training method according to an embodiment may be performed by the transmitter. The transmitter may perform the input/output training for each bandwidth with respect to the receiver RRX, and based on the input/output training being successful, the transmitter may store the number of slices used in the training. However, the disclosure is not limited thereto, and as such, according to another embodiment, the input/output training may be performed by another component.

According to an embodiment, in operation S1010, the method may include transmitting first data to a receiver. For example, the transmitter may transmit first data DAT1 to the receiver RRX. The transmitter may transmit the first data DAT1 by using a first control signal in the first bandwidth. The first control signal may be a control signal for using one slice among the plurality of slices included in the transmission circuit of the transmitter. One slice may transmit the first data DAT1 to data channel, and the receiver RRX may receive the first data DAT1 through the data channel.

In an example case in which the receiver RRX is a memory device, the input/output training may be a writing training, and the receiver RRX may record the first data DAT1 transmitted by the transmitter in the memory cell.

In operation S1020, the method may include receiving second data from the receiver. For example, the transmitter may receive second data DAT2 from the receiver RRX. The second data DAT2 may correspond to the first data DAT1. In an example case in which the receiver RRX is a memory device, the receiver may transmit the second data DAT2 recorded in the memory cell to the transmitter based on the first data DAT1.

In operation S1030, the method may include determining whether a verification is successful. For example, the transmitter may perform a training verification and determine whether the training verification is successful. For example, the transmitter may perform the training verification by determining whether the first data DAT1 and the second data DAT2 coincide with each other. For example, the transmitter may compare the first data DAT1 and the second data DAT2, and determine whether the second data DAT2 matches the first data DAT1.

In an example case in which the data DAT1 and the data DAT2 coincide with each other, the transmitter may determine that the verification is successful. In an example case in which the data DAT1 and the data DAT2 do not coincide with each other, the transmitter may determine the verification to have failed.

In operation S1040, the method may include determining a control signal. For example, based on the verification being successful, the transmitter may determine the control signal CTC. For example, the transmitter may store a first control signal as the control signal CTC of the first bandwidth. The transmitter may store the first bandwidth and the first control signal in the register.

In operation S1050, the method may adjust a control signal. For example, based on the verification being unsuccessful, the transmitter may adjust or correct the control signal CTC. For example, the transmitter may use a second control signal in a first bandwidth. According to an embodiment, the transmitter may generate the second control signal by increasing or decreasing the bit of the first control signal. For example, the transmitter may increase the first control signal by one (1) bit using a counter. The second control signal may be a control signal for using two slices among the plurality of slices. The transmitter may perform the input/output training by transmitting the first data DAT1 to the receiver by using two slices. The transmitter may repeat the process to adjust the control signal CTC until the verification becomes successful, and based on the verification being successful, the transmitter may store the adjusted control signal CTC.

However, the disclosure is not limited thereto, and as such, according to an embodiment, the transmitter may perform the input/output training in a second bandwidth, a third bandwidth, or the like, and may store the control signal CTC determined in each of the second bandwidth, the third bandwidth, or the like. The second bandwidth may be faster than the first bandwidth, and the third bandwidth may be faster than the second bandwidth. In a normal operation mode after completing the input/output training, the transmitter may receive the bandwidth information from the host. The transmitter may retrieve the control signal CTC based on the bandwidth information. The transmitter may turn on the slice based on the control signal CTC. The slice, which is turned-on, may transmit data to the receiver. As such, as the transmitter turns on the optimal slice for each bandwidth, the power-efficiency may be improved.

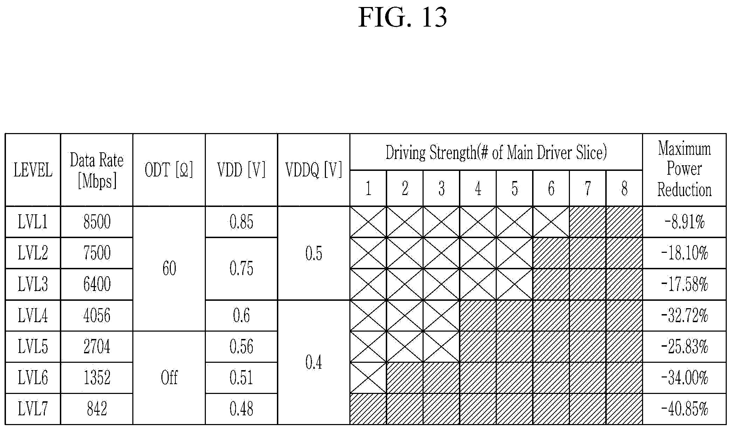

FIG. 13 is a table for explaining a power-efficiency of a transmitter according to an embodiment.

Referring to FIG. 13, a transmitter according to an embodiment may perform the input/output training with respect to a plurality of levels LVL1 to LVL7. The transmitter may operate in the data rate (or bandwidth) of 842-8500 Mbps corresponding to the levels LVL1 to LVL7. The lower the level, the relatively higher the data rate, and the higher the level, the relatively slower the data rate. However, the disclosure is not limited thereto, and as such, the number of levels may be different from eight. Also, the range of the data rate (or bandwidth) may be different from 842-8500 Mbps.

The transmitter may operate based on an on-die termination (ODT) resistance, a VDD voltage, and a VDDQ voltage, corresponding to the levels LVL1 to LVL7. The ODT resistance may mean a terminating resistance inside the transmitter, and may be configured to prevent reflection of signals. For example, the resistor 730 of FIG. 11 may be included in the ODT resistance. The transmitter may provide the ODT resistance of 60 ohm at levels LV1 to LV4. The transmitter may turn off the ODT resistance at levels LV5 to LV7.

The VDD voltage may be the first driving voltage, and may be used for driving the pre-driver circuit. The VDD voltage may be applied based on the data rate (or bandwidth) or group to which the transmitter belongs. For example, the VDD voltage may be applied based on the table of FIG. 10. The VDDQ voltage may be the second driving voltage, and may be used for during the driver and receiver.

The transmitter may be configured to use one to seven slices at levels LV1 to LV7 through the input/output training. For example, the transmitter may be configured to turn on seven slices at LV1. The transmitter may be configured to turn on one slice at LV7.

Since the related art transmitter turns on all slices at different data rates, power consumption was large. On the other hand, a transmitter according to an embodiment turns on the number of slices corresponding to each level (data rate), and thereby the power-efficiency may be improved. For example, at LV1, the maximum electric power of 8.91 % is reduced compared to related art transmitter, and at LV7, maximum electric power of 40.85% may be reduced. Accordingly, more power consumption may be reduced as more slices are turned off.

Although bandwidths corresponding to the levels of LVL1 to LVL7 are described with reference to FIG. 13, for better understanding and ease of description, the disclosure is not limited thereto, and as such, according to another embodiment, the transmitter may be configured to use more or less levels.

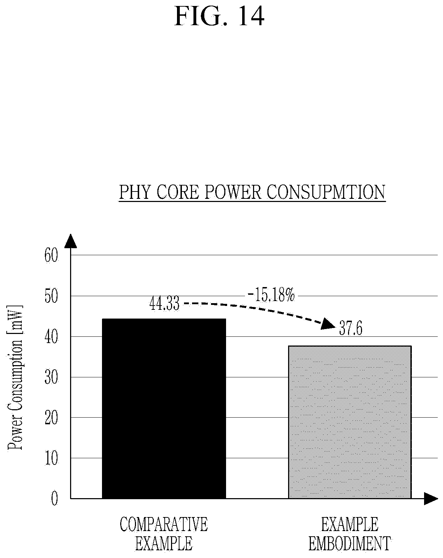

FIG. 14 is a graph for explaining a power-efficiency of a transmitter according to an embodiment.

Referring to FIG. 14, the power consumption of the core of the physical layer PHY of a transmitter according to an embodiment may be confirmed. In the related art transmitter that transmits data by using all slices, the core consumed the electric power of 44.33 mW. On the other hand, a transmitter according to an embodiment adaptively turns on and off the slice based on data rate (or bandwidth), and therefore, it may be confirmed that the core power consumption was 37.6 mW, which means reduction of the power consumption by 15.18% compared to related art scheme.

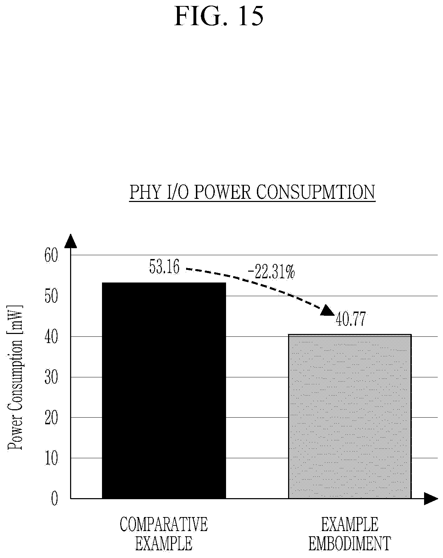

FIG. 15 is a graph for explaining a power-efficiency of a transmitter according to an embodiment.

Referring to FIG. 15, the power consumption of the input/output (I/O) circuit of the physical layer PHY of a transmitter according to an embodiment may be confirmed. In the related art transmitter that transmits data by using all slices, the input/output circuit consumed the electric power of 53.16 mW. On the other hand, a transmitter according to an embodiment adaptively turns on and off the slice based on data rate (or bandwidth), and therefore, it may be confirmed that the power consumption of the input/output circuit was 40.77 mW, which means reduction of the power consumption by 23.31 % compared to the related art scheme.

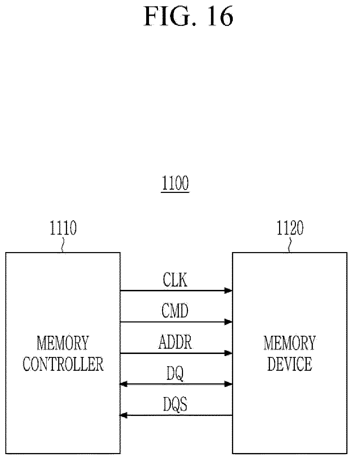

FIG. 16 is a block diagram of a memory system according to an embodiment.

Referring to FIG. 16, a memory system 1100 according to an embodiment may be provided in an electronic device. For example, the electronic device may be implemented as a personal computer (PC), a laptop computer, a mobile phone, a smart phone, a tablet PC, a personal digital assistant (PDA), an enterprise digital assistant (EDA), a digital still camera, a digital video camera, a portable multimedia player (PMP), a personal navigation device or portable navigation device (PND), a handheld game console, a mobile Internet device (MID), a wearable computer, an Internet of Things (IoT) device, an Internet of Everything (IoE) device, or a drone.

The memory system 1100 may include a memory controller 1110 and a memory device 1120.

The memory controller 1110 may control the overall operation of the memory system 1100. The memory controller 1110 may write the data DQ in the memory device 1120 or read the data DQ from the memory device 1120 based on a clock signal CLK, a command CMD, and address ADDR. For example, the memory controller 1110 may control the operation of the memory device 1120 by providing the command CMD and address ADDR to the memory device 1120 synchronously with the clock signal CLK. The memory device 1120 may transmit the data DQ and data strobe signal DQS to the memory controller 1110. For example, the memory controller 1110 and the memory device 1120 may be connected by using individual pins and individual transmission lines corresponding to the clock signal CLK, the command CMD, and the address ADDR, the data DQ, and the data strobe signal DQS.

The memory controller 1110 may communicate with the memory device 1120 by using an interface protocol such as Compute Express Link (CXL), Peripheral Component Interconnect express (PCIe), Advanced Technology Attachment (ATA), serial ATA (SATA), parallel ATA (PATA), or a serial attached SCSI (SAS). In addition, the interface protocols between the memory controller 1110 and the memory device 1120 are not limited to the above-described examples, but may also be implemented as one of other interface protocols such as universal serial bus (USB), MultiMedia Card (MMC), Enhanced Small Disk Interface (ESDI), or Integrated Drive Electronics (IDE), or the like.

The memory device 1120 may record or output the data DQ based on the indication of the memory controller 1110. The memory device 1120 may be a double data rate synchronous dynamic random access memory (DDR SDRAM), a low-power DDR (LPDDR) SDRAM, a graphics DDR (GDDR) SDRAM, a Rambus DRAM (RDRAM), a hybrid memory cube (HMC), a dual in-line memory module (DIMM), a high-bandwidth memory (HBM), an Optane DIMM and/or a non-volatile DIMM (NVDIMM).

According to an embodiment, the memory device 1120 may be implemented as a memory of one rank. However, the disclosure is not limited thereto, and as such, according to another embodiment, the memory device 1120 may be implemented as memories of a plurality of ranks. In an example case in which the memory device 1120 includes memories in the plurality of ranks, the memory controller 1110 may communicate with memories of one rank by transmitting the selection signal to the memory device 1120.

The contents on the transmitter described with reference to FIGS. 1 to 15 may be applied to the memory controller 1110, and the description on the receiver may be applied to the memory device 1120. That is, the memory controller 1110 may store the number of slices corresponding to each bandwidth through the input/output training. In an example case in which the bandwidth information is received from the host, the memory controller 1110 may retrieve the number of slices. The memory controller 1110 may generate the internal selection signal based on the number of slices and input it to the plurality of slices. The plurality of slices may be turned on and off based on the internal selection signal. The turned on slice may transmit data to the memory device 1120. Accordingly, power-efficiency of the memory system 1100 may be improved.

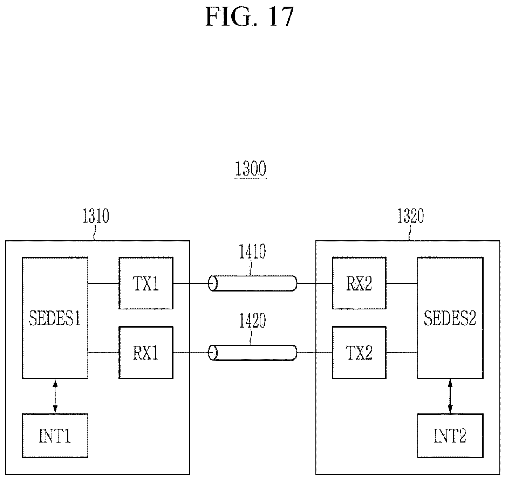

FIG. 17 is a block diagram of an electronic system according to an embodiment.

FIG. 17 shows a system for performing a bi-directional communication. Referring to FIG. 17, an electronic system 1300 may include a first electronic device 1310 and a second electronic device 1320. According to various embodiments, each of the first and second electronic devices 1310 and 1320 may be implemented as one of various electronic devices such as a desktop computer, a laptop computer, a tablet computer, a smart phone, a wearable device, a video game console, a home appliance, a medical device, or the like.

However, the disclosure is not limited thereto, and such, according to another embodiment, the electronic system 1300 may also be implemented as a single electronic device. In these embodiments, each of the first and second electronic devices 1310 and 1320 may be a component or intellectual property (IP) included in the single electronic device, and may be implemented as an object in the level of circuits, modules, chips, and/or packages. Terms of system and device are provided for enabling better understanding, and do not intend to limit the embodiments of the disclosure.

The first and second electronic devices 1310 and 1320 may communicate with each other, and may exchange data/signals through a first communication channel 1410 and a second communication channel 1420. Each of the first and second communication channels 1410 and 1420 may include a conductive material in order to transmit or transfer data and signals. As an example, each of the first and second communication channels 1410 and 1420 may be implemented with a trace pattern on a PCB, a conductor of a cable, a metal pin/pad of a connector, or the like. Although FIG. 17 illustrates two one-way communication channels 1410 and 1420, the disclosure is not limited thereto, and as such, according to another embodiment, the two one-way communication channels 1410 and 1420 may be integrated into one bi-directional communication channel.

The first electronic device 1310 may include an internal circuit INT1, a serializer/deserializer SEDES1, a transmission circuit TX1 and a reception circuit RX1 that perform their own functions. The second electronic device 1320 may include an internal circuit INT2, a serializer/deserializer SEDES2, transmission circuit TX2 and a reception circuit RX2 that perform their own functions.

The internal circuits INT1 and INT2 may operate in order to provide unique functions of the first and second electronic devices 1310 and 1320. As an example, the internal circuits INT1 and INT2 may constitute various configuration components or IPs such as a processor (e.g., CPU, GPU, AP, or the like), a memory, an image sensor, a display, or the like.

The first and second electronic devices 1310 and 1320 may be implemented as separate components, IPs, or devices. Therefore, the first electronic device 1310 may be an external device with respect to the second electronic device 1320, and the electronic device 1320 may be an external device with respect to the electronic device 1310.

The serializer/deserializer SEDES1 may serialize the data generated according to operations of the internal circuit INT1 and provide it to the transmission circuit TX1. The transmission circuit TX1 may transmit the serialized signal to the second electronic device 1320 through the communication channel 1410. The reception circuit RX2 may equalize the signal received through the first communication channel 1410, and may restore the clock and data based on the equalized signal. The serializer/deserializer SEDES2 may deserialize the signal provided from the reception circuit RX2 and provide deserialized data.

Meanwhile, the serializer/deserializer SEDES2 may serialize the data generated according to operations of the internal circuit INT2 to generate a serialized signal and provide the serialized signal to transmission circuit TX2. The transmission circuit TX2 may transmit the serialized signal to the first electronic device 1310 through the second communication channel 1420. The reception circuit RX1 may equalize the signal received through the second communication channel 1420, and may restore the clock and data based on the equalized signal. The serializer/deserializer SEDES1 may deserialize the signal provided from the reception circuit RX1 and provide deserialized data.

In this way, the first and second electronic devices 1310 and 1320 may exchange data/signals with each other through the first and second communication channels 1410 and 1420. In an example case in which the communication speed between the first and second electronic devices 1310 and 1320 increases (e.g., when the communication is performed in a higher frequency or bandwidth), the first and second electronic devices 1310 and 1320 may exchange more amount of data during a unit time.

However, due to various factors such as a skin effect, a dielectric loss, or the like, each of the first and second communication channels 1410 and 1420 may exhibit low-pass frequency response characteristics. Therefore, in the high speed operation, bandwidths of the first and second communication channels 1410 and 1420 may be limited, and may be smaller than the bandwidth of signals. This may weaken high-frequency components of the signals transmitted through the first and second communication channels 1410 and 1420, and may cause an inter-symbol interference ISI in the time domain. As a result, as the speed for transmitting signals becomes higher, the distortion of signals may be strengthened, and the quality of signals may be deteriorated.

The contents on the transmitter and receiver described with reference to FIGS. 1 to 15 may be applied to the electronic system 1300. In an embodiment, the description on the transmitter may be applied to the first electronic device 1310, and the description on the receiver may be applied to the second electronic device 1320. However, the disclosure is not limited thereto, and as such, according to another embodiment, the description on the receiver may be applied to the first electronic device 1310, and the description on the transmitter may also be applied to the electronic device 1320.

The first electronic device 1310 may store the number of slices corresponding to each bandwidth through the input/output training. In an example case in which the bandwidth information is received from the host, the first electronic device 1310 may retrieve the number of slices. The first electronic device 1310 may generate the internal selection signal based on the number of slices and input it to the plurality of slices of the transmission circuit TX1. The plurality of slices may be turned on and off based on the internal selection signal. The turned on slice may transmit data to the second electronic device 1320. Accordingly, power-efficiency of the electronic system 1300 may be improved.

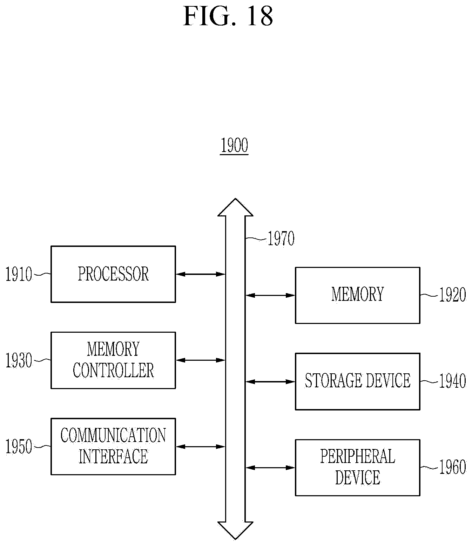

FIG. 18 is a block diagram of a computing system according to an embodiment.

Referring to FIG. 18, a computing system 1900 according to an embodiment may include a processor 1910, a memory 1920, a memory controller 1930, a storage device 1940, a communication interface 1950, a peripheral device 1960, and a bus 1970. However, the disclosure is not limited thereto, and as such, the computing system 1900 may further include other components, such as, other general-purposed components.

The processor 1910 may control the overall operation of respective components of the computing system 1900. The processor 1910 may be implemented as at least one of various processing units such as CPU, AP, GPU, or the like.

The memory 1920 may store various data and instructions. The memory controller 1930 may control the transmission or transfer of data or instructions to the memory 1920 and the transmission or transfer of data or instructions from the memory 1920. The content of the transmitter and the receiver described with reference to FIGS. 1 to 15 may be equally applied to the memory 1920 and/or the memory controller 1930.

For example, the description on the transmitter may be applied to the memory controller 1930, and the description on the receiver may be applied to the memory 1920. That is, the memory controller 1930 may store the number of slices corresponding to each bandwidth through the input/output training. In an example case in which the bandwidth information is received from the host (e.g., the processor 1910 or external device), the memory controller 1930 may retrieve the number of slices. The memory controller 1930 may generate the internal selection signal based on the number of slices and input it to the plurality of slices. The plurality of slices may be turned on and off based on the internal selection signal. The turned on slice may transmit data to the memory 1920. Accordingly, power-efficiency of the computing system 1900 may be improved.

In some embodiments, the memory controller 1930 may be provided as a separate chip from the processor 1910. In some embodiments, the memory controller 1930 may be provided as an internal component of the processor 1910.

The storage device 1940 may include non-temporarily store programs and data. In some embodiments, the storage device 1940 may be implemented as a non-volatile memory. The communication interface 1950 may support wired/wireless Internet communication of the computing system 1900. In addition, the communication interface 1950 may also support various communication schemes other than the Internet communication.

The content of the receiver described with reference to FIGS. 1 to 15 may also be applied to the peripheral device 1960 according to an embodiment. The peripheral device 1960 may be a device configured to convert a motion picture a still image, or the like, to an electrical signal, such as a camera, a scanner, a webcam, or the like, or a display device. In an embodiment, the image data obtained through the peripheral device 1960 may be stored in the memory 1920. In this case, the memory 1920 may store the image data obtained from the peripheral device 1960 or store the video signal processed by the processor 1910. In an embodiment, the peripheral device 1960 may display the image through the display panel in real time.

The bus 1970 may provide a communication function between components of the computing system 1900. The bus 1970 may include at least one type of bus according to the communication protocol between the components.

In some embodiments, each component or combinations of two or more components described with reference to FIGS. 1 to 18 may be implemented as a digital circuit, a programmable or non-programmable logic device or array, an application-specific integrated circuit (ASIC), or the like.

While this disclosure has been described in connection with various example embodiments, it is to be understood that the disclosure is not limited to the example embodiments. Instead, the disclosure may cover various modifications and equivalent arrangements included within the scope of the appended claims.

Embodiments are set out in the following clauses:
Clause 1: A transmitting device comprising:
   a transmission circuit configured to transmit first data in at least one slice, among a plurality of slices in the transmission circuit, in a first bandwidth;
   a reception circuit configured to receive second data corresponding to the first data; and
   a controller configured to determine a first number of slices, among the plurality of slices, for the first bandwidth based on the first data and the second data.
Clause 2: The transmitting device of clause 1, wherein the controller is further configured to determine a second number of slices, among the plurality of slices, for a second bandwidth greater than the first bandwidth, the second number of slices being equal to or greater than the first number of slices.
Clause 3: The transmitting device of clause 1, wherein the controller is further configured to determine a second number of slices, among the plurality of slices, for a second bandwidth smaller than the first bandwidth, the second number of slices being equal to or lesser than the first number of slices.
Clause 4: The transmitting device of any preceding clause, wherein the controller is further configured to:
   perform a verification based on the first data and the second data,
   store the first bandwidth and the first number of slices based on the verification being successful, the first number of slices being a number of slices used for transmission of the first data, and
   increase the number of slices used for transmission of the first data based on the verification being unsuccessful.
Clause 5: The transmitting device of clause 4, wherein the controller is further configured to:
   determine the verification to be successful based on the first data and the second data coinciding with each other, and
   determine the verification to have failed based on the first data and the second data not coinciding with each other.
Clause 6: The transmitting device of clause 4 or 5, wherein the controller comprises a register configured to:
   store a plurality of bandwidths and a number of slices corresponding to each of the plurality of bandwidths, and
   store the first bandwidth along the first number of slices as one the plurality of bandwidths in the register based on the verification being successful..
Clause 7: The transmitting device of clause 6, wherein, based on an indication of the first bandwidth being received from a host, the controller is further configured to:
   read the first number of slices from the register, and
   generate a control signal based on the first number of slices.
Clause 8: The transmitting device of clause 7, wherein the transmission circuit comprises:
   a pre-driver circuit configured to generate an internal selection signal based on the control signal; and
   a driver configured to:
      turn on or off based on the internal selection signal, and
      generate a transmission signal corresponding to the first data.
Clause 9: The transmitting device of clause 8, wherein:
   the pre-driver circuit is operated by a first driving voltage; and
   the driver is operated by a second driving voltage.
Clause 10: The transmitting device of clause 9, wherein the controller is further configured to output a voltage control signal to a power management integrated circuit to control the power management integrated circuit to output the first driving voltage or the second driving voltage.
Clause 11: The transmitting device of clause 10, wherein the controller is further configured to output the voltage control signal to control the power management integrated circuit to output the first driving voltage corresponding to the first bandwidth.
Clause 12: The transmitting device of clause 11, wherein the controller is further configured to:
   determine a first group, among a plurality of groups, the transmitting device belong to the first group, and
   output the voltage control signal based on the first group and the first bandwidth.
Clause 13: A transmitting device comprising:
   a first transmission gate configured to:
      receive a first signal, and
      output the first signal to a first node based on a selection signal of a first level;
   a first N-channel MOSFET (NMOS) transistor comprising:
      a drain connected to the first node,
      a gate through which an inversion signal of the selection signal is input, and
      a source that is grounded;
   a first inverter configured to output a second signal by inverting a signal input through the first node;
   a first P-channel MOSFET (PMOS) transistor comprising:
      a source through which a first driving voltage is input, and
      a gate through which the second signal is input, the first PMOS transistor configured to be turned on based on the second signal of a second level to transmit data to a receiving device;
   a second transmission gate configured to:
      receive the first signal, and
      output the first signal to a second node based on a selection signal of the first level;
   a second PMOS transistor comprising:
      a drain connected to the second node,
      a gate through which the selection signal is input, and
      a source through which a second driving voltage is input;
   a second inverter configured to output a third signal by inverting a signal input through the second node; and
   a second NMOS transistor comprising:
      a source that is grounded, and
      a gate through which the third signal is input, the second NMOS transistor configured to be turned on based on the third signal of the first level to transmit the data to the receiving device.
Clause 14: A transmission training method comprising:
   transmitting first data to a receiver by using at least one slice, among a plurality of slices, in a first bandwidth;
   receiving second data corresponding to the first data from the receiver;
   storing the first bandwidth and a number of slices used for transmission of the first data, based on a verification of the second data being successful; and
   increasing the number of slices used for transmission of the first data, based on the verification of the second data being unsuccessful.
Clause 15: The transmission training method of clause 14, further comprising:
   determining the verification to be successful based on the first data and the second data coinciding with each other; and
   determining the verification to have failed based on the first data and the second data not coinciding with each other.

## Claims

1. A transmitting device comprising:
a transmission circuit configured to transmit first data by using at least one slice, among a plurality of slices in the transmission circuit, in a first bandwidth;
a reception circuit configured to receive second data corresponding to the first data; and
a controller configured to determine a first number of slices, among the plurality of slices, for the first bandwidth based on the first data and the second data.

2. The transmitting device of claim 1, wherein the controller is further configured to determine a second number of slices, among the plurality of slices, for a second bandwidth greater than the first bandwidth, the second number of slices being equal to or greater than the first number of slices.

3. The transmitting device of claim 1, wherein the controller is further configured to determine a second number of slices, among the plurality of slices, for a second bandwidth smaller than the first bandwidth, the second number of slices being equal to or lesser than the first number of slices.

4. The transmitting device of any preceding claim, wherein the controller is further configured to:
perform a verification based on the first data and the second data,
store the first bandwidth and the first number of slices based on the verification being successful, the first number of slices being a number of slices used for transmission of the first data, and
increase the number of slices used for transmission of the first data based on the verification being unsuccessful.

5. The transmitting device of claim 4, wherein the controller is further configured to:
determine the verification to be successful based on the first data and the second data coinciding with each other, and
determine the verification to have failed based on the first data and the second data not coinciding with each other.

6. The transmitting device of claim 4 or 5, wherein the controller comprises a register configured to:
store a plurality of bandwidths and a number of slices corresponding to each of the plurality of bandwidths, and
store the first bandwidth along the first number of slices as one the plurality of bandwidths in the register based on the verification being successful..

7. The transmitting device of claim 6, wherein, based on an indication of the first bandwidth being received from a host, the controller is further configured to:
read the first number of slices from the register, and
generate a control signal based on the first number of slices.

8. The transmitting device of claim 7, wherein the transmission circuit comprises:
a pre-driver circuit configured to generate an internal selection signal based on the control signal; and
a driver configured to:
turn on or off based on the internal selection signal, and
generate a transmission signal corresponding to the first data.

9. The transmitting device of claim 8, wherein:
the pre-driver circuit is operated by a first driving voltage; and
the driver is operated by a second driving voltage.

10. The transmitting device of claim 9, wherein the controller is further configured to output a voltage control signal to a power management integrated circuit to control the power management integrated circuit to output the first driving voltage or the second driving voltage.

11. The transmitting device of claim 10, wherein the controller is further configured to output the voltage control signal to control the power management integrated circuit to output the first driving voltage corresponding to the first bandwidth.

12. The transmitting device of claim 11, wherein the controller is further configured to:
determine a first group, among a plurality of groups, the transmitting device belong to the first group, and
output the voltage control signal based on the first group and the first bandwidth.

13. A transmitting device comprising:
a first transmission gate configured to:
receive a first signal, and
output the first signal to a first node based on a selection signal of a first level;
a first N-channel MOSFET (NMOS) transistor comprising:
a drain connected to the first node,
a gate through which an inversion signal of the selection signal is input, and
a source that is grounded;
a first inverter configured to output a second signal by inverting a signal input through the first node;
a first P-channel MOSFET (PMOS) transistor comprising:
a source through which a first driving voltage is input, and
a gate through which the second signal is input, the first PMOS transistor configured to be turned on based on the second signal of a second level to transmit data to a receiving device;
a second transmission gate configured to:
receive the first signal, and
output the first signal to a second node based on a selection signal of the first level;
a second PMOS transistor comprising:
a drain connected to the second node,
a gate through which the selection signal is input, and
a source through which a second driving voltage is input;
a second inverter configured to output a third signal by inverting a signal input through the second node; and
a second NMOS transistor comprising:
a source that is grounded, and
a gate through which the third signal is input, the second NMOS transistor configured to be turned on based on the third signal of the first level to transmit the data to the receiving device.

14. A transmission training method comprising:
transmitting first data to a receiver by using at least one slice, among a plurality of slices, in a first bandwidth;
receiving second data corresponding to the first data from the receiver;
storing the first bandwidth and a number of slices used for transmission of the first data, based on a verification of the second data being successful; and
increasing the number of slices used for transmission of the first data, based on the verification of the second data being unsuccessful.

15. The transmission training method of claim 14, further comprising:
determining the verification to be successful based on the first data and the second data coinciding with each other; and
determining the verification to have failed based on the first data and the second data not coinciding with each other.
